# EUROPEAN PATENT APPLICATION

(11) **EP 4 641 851 A1**
(43) Date of publication of application: **29.10.2025**
(21) Application number: 24172450.9
(22) Date of filing: 25.04.2024
(51) Int. Cl.: H02B 1/052

(54) **MOUNTING EQUIPMENT SUITABLE FOR MOUNTING DIN RAIL MOUNTABLE EQUIPMENT**

(71) Applicant: Siemens Aktiengesellschaft, 80333 München (DE)
(72) Inventor: Cordobes Martin, Sonia, 90429 Nürnberg (DE); Nickl, Felix, 91233 Neunkirchen a. Sand (DE); Kiepfer, Andreas, 91056 Erlangen (DE)
(74) Representative: Siemens Patent Attorneys

(57) **Abstract**

The invention concerns a mounting equipment (10, 30) suitable for mounting DIN rail mountable equipment (60) comprising a mounting body having a front side (14) and a back side (12) wherein the front side (14) is formed to enable mounting DIN rail mountable equipment (60) and wherein the mounting equipment (10, 30) comprises one or more magnets (20) arranged to enable attaching the mounting equipment (10, 30) magnetically to a surface (50) with the back side (12) facing the surface (50).

## Description

The present invention relates to a mounting equipment suitable for mounting DIN rail mountable equipment. Many devices such as circuit breakers are designed to be attached to a DIN rail inside equipment racks.

The DIN rail is typically a preformed metal bar that is installed in an environment such as an equipment rack using screws. The devices themselves are typically attached to the DIN rail using a clip mount system, i.e. without using permanent attachment.

This means that while devices can be installed and uninstalled comparatively easily, the same is not true of the DIN rail itself. In an environment where devices are tested or a non-permanent installation of a rail-mountable devices is required, there may be either no space on an existing DIN rail or they may be no DIN rail available. In these cases, installation requires considerably more effort.

It is thus an object of the present invention to provide a solution for simplified installation of DIN rail mountable equipment.

The mounting equipment according to the invention is suitable for mounting DIN rail mountable equipment. It comprises a mounting body having a front side and a back side. The front side is formed to enable mounting DIN rail mountable equipment.

Preferentially this means that the front side has the form that a DIN rail mount typically has, i.e. it may have a top-hat shape or a C-section or a G-section. The front side thus allows clipping devices onto the mounting equipment that are suitable for mounting to a DIN rail of the mentioned types.

The mounting equipment further comprises one or more magnets arranged to enable attaching the mounting equipment magnetically to a surface with the back side facing said surface.

Thus, while a typical DIN rail is a metal bar formed to provide the required cross section and is supplied with holes to allow a screw connection to a surface, the mounting equipment according to the invention uses a magnetic connection to the surface that it is attached to.

In one embodiment the mounting equipment according to the invention is formed entirely from a permanent magnet material. In that case the mounting body and magnets are one and the same.

In another embodiment, the mounting equipment according to the invention comprises two parts, namely the mounting body and the magnets. The magnets are attached to the mounting body.

The mounting equipment according to the invention can easily be installed in a typical environment that a DIN rail might be installed. Compared to a DIN rail installation is much easier as the magnets allow just placing it against a suitable surface without having to use screws to hold the mounting equipment. Having installed the mounting equipment, devices can easily be attached to it. Removal of the mounting equipment is also much simpler that removal of a DIN rail as it just needs to be pulled off the surface with sufficient force.

Further features that may be added alone or together in exemplary embodiments of the invention include:
The mounting body may be formed from a plastic material. This makes manufacture simple and cheap. Specifically, it may be formed by extrusion.

Alternatively, the mounting body may be formed by an additive manufacturing process, e.g. by FDM (fused deposition modeling).

The mounting body may be formed in such a way that it incorporates coupling elements that allow connecting multiple mounting equipment together to form a longer mounting equipment. Advantageously, such coupling elements may be created more easily when a using an additive manufacturing process. Coupling elements may comprise, e.g. a protrusion on a side of the mounting equipment and a notch on the opposing side of the mounting equipment that are formed to interlock when two mounting equipment are brought into close contact.

The mounting body may comprise one or more recesses. Permanent magnets are arranged within the recesses. The recesses are advantageously formed in the backside of the mounting body so that magnets can be arranged to be close to the surface that the mounting equipment gets attached to. In an advantageous embodiment the permanent magnets are arranged to share a flush surface with the back side of the mounting body. In this way the force of the magnets holding the mounting equipment is optimal.

In another embodiment of the mounting equipment the magnets are arranged inside the mounting body. Advantageously they are arranged so that a thin layer of material of the mounting body remains between magnet and the back side of the mounting equipment. Thus, while the force holding the mounting equipment at a surface it is mounted to is lowered somewhat by the distance remaining between the magnets and the surface, mounting the magnets is simplified as they cannot detach from the mounting body under their own force holding them at the mounting surface.

The permanent magnets may be ferrite magnets, Sm-Co magnets, Al-Ni-Co magnets or Nd-Fe-B magnets. These have an increased Curie temperature and thus an increased tolerance for temperature over other types of permanent magnet. They may thus be used even when the environment that the mounting equipment is used in may be subject to high temperatures. Ferrite magnets keep their magnetic properties at temperatures not higher than 250 °C while the other mentioned magnet types have even higher temperature limits.

Embodiments of the present invention are now described with reference to the accompanying drawings to which the invention is not limited. The illustrations of the drawings are in schematic form. It is noted that in different figures, similar or identical elements use the same reference signs.
Fig. 1 illustrates a first embodiment of a mounting equipment mounted to a surface with a DIN rail device mounted to it.
Fig. 2 illustrates a second embodiment of a mounting equipment mounted to a surface with a DIN rail device mounted to it.

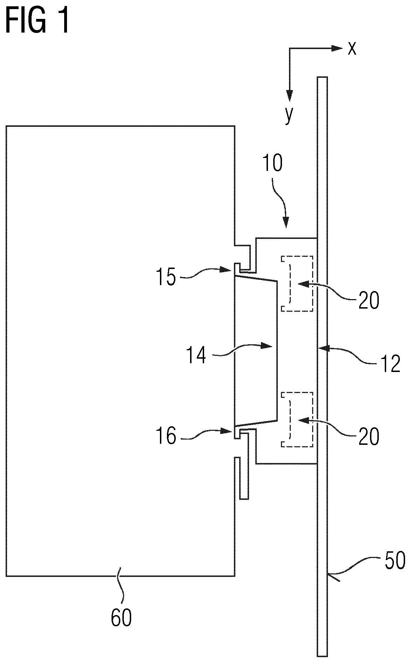

Figure 1 shows a first embodiment of a mounting equipment 10. The mounting equipment 10 is mounted to a surface 50, e.g. the backplane of an equipment rack, with its back side 12. On its front side a DIN rail device 60 is mounted to it. The specific type of DIN rail device 60 is not relevant for the mounting equipment 10 except that the DIN rail device 60 fits the form (cross section) of the mounting equipment 10. In this example, the DIN rail device is assumed to be a temperature sensor.

Figure 1 shows a cross section of the mounting equipment 10 and the other elements, showing the x and y axis extensions at a single z coordinate. As with a DIN rail, the cross section of the mounting equipment 10 would look similar at any different z coordinate along its length in the z direction. Thus, in the present example, the mounting equipment 10 is formed by extrusion from a plastic material such as polyethylene (PE) or polypropylene.

The front side 14 of the mounting equipment 10 is formed to allow mounting DIN rail devices 60, i.e. the front side provides the two co-planar thin bars 15, 16 extending in the y-z-plane that extend to a total width in the y-direction of 35 mm.

The main body 18 of the mounting equipment 10 is wider than a typical DIN rail would be to accommodate permanent magnets 20. In the present example two separate permanent magnets 20 are spaced along the y-direction and arranged within the main body 18 of the mounting equipment 10. Other configurations may be used such as a single permanent magnet.

The permanent magnets 20 are arranged to be close to the backside 12 of the mounting equipment 10 to allow for good adhesion of the mounting equipment 10 to the surface 50. Still, the permanent magnets 20 are at least partly enclosed by the main body 18.

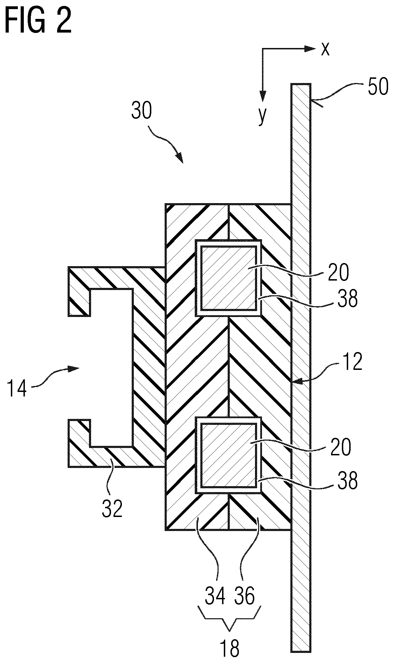

Figure 2 shows a second embodiment of a mounting equipment 30, again as a cross section in the same way as figure 1. Mounting equipment 30 uses a "C" cross section instead of a top hat configuration as mounting equipment 10. It is to be understood that the different known cross sections can be combined in any way with the other features and neither example is limited to the particular cross section shown in the figures.

The mounting equipment 30 is constructed from three parts 32, 34, 36 using FDM, i.e. additive manufacturing, using polylactic acid (PLA) as a base material. Other materials or manufacturing methods may be employed depending on the needs, e.g. with respect to the temperature stability of the mounting equipment 30.

The first part 32 of the mounting equipment 30 corresponds to the front side of the mounting equipment 30. It is formed to allow mounting DIN rail devices to the mounting equipment 30. Thus, in this example, it is formed to present the required "C" section.

The second and third part 34, 36 together form the main body 18 of mounting equipment 30. They are formed to be assembled and to provide one or more recesses 38 in which permanent magnets 20 can be placed before the second and third part 34, 36 are fixed together, e.g. by applying an adhesive. Instead of using an adhesive the parts 32, 34, 36 can also be formed to include coupling elements that interlock upon bringing the parts 32, 34, 36 in a suitable placement with respect to each other.

### List of reference numbers

- 10, 30: mounting equipment
- 12: back side
- 14: front side
- 15, 16: co-planar bars
- 18: main body
- 20: permanent magnet
- 32, 34, 36: parts
- 38: recess
- 50: surface
- 60: DIN rail device

## Claims

1. A mounting equipment (10, 30) suitable for mounting DIN rail mountable equipment (60) comprising a mounting body having a front side (14) and a back side (12) wherein the front side (14) is formed to enable mounting DIN rail mountable equipment (60) and wherein the mounting equipment (10, 30) comprises one or more
magnets (20) arranged to enable attaching the mounting equipment (10, 30) magnetically to a surface (50) with the back side (12) facing the surface (50).

2. The mounting equipment (10, 30) of claim 1 wherein the mounting body is formed from a plastic material.

3. The mounting equipment (10, 30) of claim 1 wherein the mounting body is formed by extrusion.

4. The mounting equipment (10, 30) of claim 1 wherein the mounting body is formed by an additive manufacturing process.

5. The mounting equipment (10, 30) of claim 1 wherein the mounting body comprises one or more recesses (38) and wherein permanent magnets (20) are arranged within the recesses (38).

6. The mounting equipment (10, 30) of claim 5 wherein the permanent magnets (20) are arranged to share a flush surface with the back side (12) of the mounting body.

7. The mounting equipment (10, 30) of claim 5 wherein the permanent magnets (20) are ferrite magnets, Sm-Co magnets, Al-Ni-Co magnets or Nd-Fe-B magnets.
